# EUROPÄISCHE PATENTSCHRIFT

(11) **EP 2 210 996 B1**
(45) Veröffentlichungstag und Bekanntmachung des Hinweises auf die Patenterteilung: **04.01.2017**
(21) Anmeldenummer: 09151083.4
(22) Anmeldetag: 22.01.2009
(51) Int. Cl.: E04F 15/024, F24D 3/12, F24D 5/10

(54) **Bodenkonstruktion**
Floor construction
Construction d'un sol

(43) Veröffentlichungstag der Anmeldung: 28.07.2010
(73) Patentinhaber: Erich Mikeska Estrichbau GmbH, 25474 Ellerbek (DE)
(72) Erfinder: Mikeska, Boris, 25474 Ellerbek (DE)
(74) Vertreter: Uexküll & Stolberg

(56) Entgegenhaltungen:
- EP-A1- 0 529 525
- EP-A2- 1 544 550
- DE-A1- 3 014 390
- DE-A1- 10 043 288
- DE-A1-102006 052 500
- DE-C1- 10 205 668
- DE-U1-202005 002 322
- FR-A- 1 306 680
- US-A- 4 508 162
- US-A- 4 683 690
- AHRENS G: "DAS BUROGEBAUDE IM WANDEL" DEUTSCHE BAUZEITSCHRIFT - DBZ, BERTELSMANN FACHVERLAG. GUTERSLOH, DE, Nr. 4, 1. April 1989 (1989-04-01), XP000025918 ISSN: 0011-4782

## Beschreibung

Die vorliegende Erfindung betrifft eine Bodenkonstruktion zum Aufbauen auf einem Unterboden und ein Verfahren zum Aufbauen derselben. Die Bodenkonstruktion weist dabei in einem ersten Flächenbereich mindestens eine erste und eine zweite Schicht auf und in einem zweiten Flächenbereich zwischen der ersten und zweiten Schicht eine dritte Schicht. In der ersten Schicht, die oberhalb der zweiten Schicht angeordnet ist, verlaufen Leitungen eines Heiz- und/oder Kühlsystems und die dritte Schicht weist Lüftungswege eines Lüftungssystems auf.

Zur Heizung bzw. Kühlung und gleichzeitiger Belüftung von Räumen ist es bekannt, eine Fußbodenheizung bzw. -kühlung mit einem Lüftungssystem in einer Bodenkonstruktion zu kombinieren. Dabei werden unterhalb einer mit Leitungen der Fußbodenheizung bzw. -kühlung versehenen Estrichschicht Lüftungskanäle angeordnet, durch die ein Luftstrom eines Lüftungssystem geführt wird. Die durch die Lüftungskanäle geführte Luft kann sich beispielsweise durch die von der Fußbodenheizung nach unten hin abgegebene Wärme aufheizen und dann vorzugsweise in Form eines vertikalen Warmluftschleiers vor einer Fensterfront in den Raum geführt werden. Insbesondere beim Kühlen des Bodens kann durch die Lüftung ein sich bildender und leistungsmindernder Kaltluftsee unterhalb der Fußbodenkühlung abgeführt und in analoger Weise zur Raumluftkühlung verwendet werden.

Aus der DE 20 2006 052 500 A1 ist ein Multiboden zur Aufnahme von beispielsweise einer Fußbodenheizung, von Strom- und/oder Datenkabeln, Schläuchen oder dergleichen bekannt, der auf einem Unterboden, z.B. dem Rohbeton verlegt und mit einer Estrichschicht überdeckt wird.

Dokument DE 102 05 668 C1 beschreibt eine Fußbodenanordnung mit einem schwimmenden Estrich und schleifenförmig eingebetteten Kühlrohren bzw. Heizrohren. Die Fußbodenanordnung gemäß D2 enthält keine Lüftungswege eines Lüftungssystems.

Aus Dokument DE 30 14 390 A1 ist eine Einrichtung für eine Flächenbeheizung mit rohrförmigen Heizelementen und Lüftungswegen eines Lüftungssystems bekannt.

Nachteilig an den bekannten Konstruktionen ist es, dass die Möglichkeiten der Verkabelung darauf beschränkt sind, die Strom- und/oder Datenkabel, Schläuche oder dergleichen entlang von Unterflurkanälen zu führen. Ein Verlegen der Versorgungsleitungen in beliebige Richtungen ist nicht möglich. Vor allem ein nachträgliches Auf- oder Umrüsten der Bodenkonstruktion mit Versorgungsleitungen wie Strom- und/oder Datenkabeln ist nur mit großem Aufwand und kostenintensivem Aufreißen der Bodenkonstruktion möglich.

Daher ist es die Aufgabe der vorliegenden Erfindung, die Verkabelungsmöglichkeiten bei einer Bodenkonstruktion der eingangs beschriebenen Art zu verbessern, wobei das Auf- oder Umrüsten der Bodenkonstruktion mit Versorgungsleitungen vereinfacht ist.

Gelöst wird diese Aufgabe durch eine Bodenkonstruktion gemäß Anspruch 1 bzw. durch ein Verfahren zum Aufbauen dieser gemäß Anspruch 12. Bevorzugte Ausführungsformen der erfindungsgemäßen Bodenkonstruktion bzw. des Verfahrens zum Aufbauen dieser sind Gegenstand der jeweils abhängigen Ansprüche.

Gemäß einem ersten Aspekt der Erfindung wird eine Bodenkonstruktion bereitgestellt, bei der die zweite Schicht eine Trägerschicht ist, die unterseitig mit einer Mehrzahl von über die Fläche verteilten Stützbeinen verbunden ist, die dazu ausgestaltet sind, die zweite Schicht beabstandet gegen den Unterboden abzustützen, um unterhalb der zweiten Schicht einen zusammenhängenden Hohlraum in dem ersten und zweiten Flächenbereich über dem Unterboden zu erhalten.

Der unterhalb der zweiten Schicht und oberhalb des Unterbodens erhaltene zusammenhängende Hohlraum bietet verbesserte Verkabelungsmöglichkeiten, wobei Strom- und/oder Datenkabel, Schläuche oder dergleichen in beliebige Richtungen verlegt werden können. Ein nachträgliches Auf- oder Umrüsten der Bodenkonstruktion mit Versorgungsleitungen ist gegenüber bekannten Systemen stark vereinfacht, da die Verlegung von Versorgungsleitungen nicht an die Position von Unterflurkanälen gebunden ist. Es kann an beliebiger Stelle, vorzugsweise im ersten Flächenbereich, ein Öffnungsschacht gebildet werden, sodass von dort ein Zugriff auf den zusammenhängenden Hohlraum und die darin verlegten Versorgungsleitungen ermöglicht wird.

Die zweite Schicht ist zwischen dem ersten und zweiten Flächenbereich abgestuft. Die zweite Schicht ist dabei insofern zwischen dem ersten und zweiten Flächenbereich abgestuft als zumindest die oberseitige Oberfläche eine Stufe bildet, wobei die oberseitige Oberfläche im zweiten Flächenbereich niedriger liegt als die oberseitige Oberfläche im ersten Flächenbereich. Vorzugsweise ist diese Vertiefung im zweiten Flächenbereich durch die dritte Schicht gefüllt, sodass die oberseitige Oberfläche der dritten Schicht im zweiten Flächenbereich und die oberseitige Oberfläche der zweiten Schicht im ersten Flächenbereich auf gleicher Höhe liegen. Die zweite und dritte Schicht bilden dann vorzugsweise eine im Wesentlichen stufenlose Oberflächenebene über dem ersten und zweiten Flächenbereich. Vorzugsweise ist die als Trägerschicht ausgebildete zweite Schicht aus Trägerplatten aufgebaut, die beim Aufbauen über die Fläche verlegt werden. Die Abstufung in der zweiten Schicht kann dabei zwischen den Platten angeordnet sein oder es können Platten mit einer profilierten Stufe vorgefertigt sein.

Die unterseitige Oberfläche der zweiten Schicht muss dabei hingegen nicht zwischen dem ersten und zweiten Flächenbereich abgestuft sein, sondern kann auch stufenlos verlaufen. Dies ist insbesondere dann möglich, wenn die Schichtdicke der zweiten Schicht im zweiten Flächenbereich dünner ausgestaltet ist als im ersten Flächenbereich. Damit in diesem Fall eine ausreichende Trägerstabilität der zweiten Schicht im zweiten Flächenbereich gewährleistet werden kann, ist es möglich, ein stabileres Material für die zweite Schicht im zweiten Flächenbereich vorzusehen. Beispielsweise können im zweiten Flächenbereich Metallplatten (z.B. aus Eisen, Stahl, Zink, Aluminium oder Ähnlichem) mit einer Dicke von wenigen Millimetern die zweite Schicht bilden, wogegen im ersten Flächenbereich dickere Gipskartonplatten als zweite Schicht dienen können. Diese Ausgestaltung hat den Vorteil, dass sich an der unterseitigen Oberfläche der zweiten Schicht nur eine kleine oder gar keine Abstufung ausbildet, die für ein nachträgliches Verlegen von Versorgungsleitungen im zusammenhängenden Hohlraum unterhalb der zweiten Schicht hinderlich sein könnte. Im Übrigen kann durch Metallplatten, die im zweiten Flächenbereich die zweite Schicht bilden, eine Bodenkonstruktion von insgesamt geringerer Höhe erreicht werden, da die für einen bestimmten Durchmesser der Versorgungsleitungen benötigte Minimalhöhe des zusammenhängenden Hohlraums zwischen der zweiten Schicht und dem Unterboden durch die Höhe des Hohlraums im zweiten Flächenbereich bestimmt wird. Die Gesamthöhe der Bodenkonstruktion vom Unterboden aus konnte auf bis zu 110 mm minimiert werden. Damit kann die erfindungsgemäße Bodenkonstruktion erheblich flacher ausgestaltet werden als der aus der DE 20 2006 052 500 A1 bekannte Multiboden, der eine Mindesthöhe von 185 mm hat.

Vorzugsweise weist die erste Schicht ein aushärtbares Füllmaterial wie etwa Fließ-, Gips-Anhydrid- und/oder Zementestrich auf, das Zwischenräume zwischen den Leitungen des Heizund/oder Kühlsystems füllt. Vorzugsweise ist das aushärtbare Füllmaterial fließ- und/oder streichfähig. Damit wird erreicht, dass die erste Schicht durch die Leitungen des Heizund/oder Kühlsystems möglichst effektiv flächig geheizt oder gekühlt werden kann. Dazu sollte das Füllmaterial die Leitungen des Heiz- und/oder Kühlsystems vollständig umspülen. Oberhalb des ausgehärteten Füllmaterials kann eine Trittschicht wie beispielsweise Parkett, Laminat, PCV, Teppich oder Ähnliches verlegt sein.

Es ist ebenfalls von Vorteil, wenn mindestens eines der Stützbeine längenverstellbar ausgestaltet ist. Vorzugsweise sind die Stützbeine stufenlos längenverstellbar. Beispielsweise kann eine Stützhülse, die koaxial über eine Gewindeverschraubung mit einem Fußteil verbunden ist, bei einer gewünschten Position z.B. durch eine Kontermutter fixiert werden, um eine gewünschte Gesamtlänge des Stützbeins zu erreichen. Die Stützbeine können dadurch individuell in der Höhe angepasst werden, um eventuelle Unebenheiten oder Schieflagen des Unterbodens auszugleichen und die Trägerschicht der Bodenkonstruktion möglichst eben und horizontal aufbauen zu können. Damit kann den baulichen Anforderungen gemäß DIN 18560 im Hinblick auf eine gleichmäßige Dicke aller verwendeten Estrichschichten in einfacher Weise entsprochen werden. Dies ist ein Vorteil gegenüber bereits bekannten Systemen der eingangs beschriebenen Art, bei denen häufig Unebenheiten oder Schieflagen des Unterbodens nicht anforderungsgerecht durch die Estrichschichten selbst ausgeglichen werden.

Für den Bereich der Abstufung der Trägerschicht kann eine besondere Ausgestaltung von bestimmten Stützbeinen von Vorteil sein, um die Anzahl an benötigten Stützbeinen zu minimieren. Diese Stufenstützbeine, die im Bereich der Abstufung der zweiten Schicht angeordnet sind, können dabei mit einer ersten Stützfläche und einer zweiten Stützfläche verbunden sein. Die erste Stützfläche erstreckt sich dabei in Kontakt mit der unterseitigen Oberfläche der zweiten Schicht in Richtung des ersten Flächenbereichs und die zweite Stützfläche in Kontakt mit der unterseitigen Oberfläche der zweiten Schicht in Richtung des zweiten Flächenbereichs. Für den Fall, dass die zweite Schicht auch an ihrer unterseitigen Oberfläche eine Abstufung aufweist, liegen die erste Stützfläche und die zweite Stützfläche auf verschiedenen Höhen. Damit die verwendeten Stützbeine dieser Art bei Bodenkonstruktionen verschiedener Art einsetzbar sind, ist es vorteilhaft, wenn die erste Stützfläche und/oder die zweite Stützfläche individuell höhenverstellbar mit dem Stützbein verbunden sind. Die erste Stützfläche und die zweite Stützfläche können dabei auch auf die gleiche Höhe eingestellt werden, sodass die Stufenstützbeine auch außerhalb eines Bereichs einer unterseitigen Abstufung eingesetzt werden können.

Vorzugsweise wird die erste Stützfläche durch eine oberseitige Oberfläche einer sich horizontal erstreckenden ersten Stützplatte und die zweite Stützfläche durch eine oberseitige Oberfläche einer sich horizontal erstreckenden zweiten Stützplatte gebildet. Dabei ist die erste Stützplatte oberhalb der zweiten Stützplatte mit dem Stützbein verbunden. Beispielsweise kann das Stützbein eine Stützhülse aufweisen, die koaxial über eine Gewindeverschraubung mit einem Fußteil verbunden ist, bei einer gewünschten Höhe z.B. durch eine Kontermutter fixiert werden kann und in ihrem oberen Ende mit der ersten Stützplatte fest verbunden ist. Die zweite Stützplatte ist dabei mit der Stützhülse verbunden und kann bei einer gewünschten Höhe relativ zur Stützhülse z.B. durch eine weitere Kontermutter fixiert werden.

Es ist weiterhin bevorzugt, wenn die dritte Schicht mindestens ein Profil für die Lüftungswege des Lüftungssystems und ein aushärtbares Füllmaterial wie etwa Fließ-, Gips-Anhydrid- und/oder Zementestrich aufweist, das Zwischenräume zwischen den Lüftungswegen des Lüftungssystems füllt. Vorzugsweise ist das aushärtbare Füllmaterial fließ- und/oder streichfähig. Das Profil ist dabei vorzugsweise aus mindestens einem vorgefertigten Flächensegment zusammengesetzt, das die Ausgestaltung der Lüftungswege vorgibt. Damit wird das Aufbauen der Bodenkonstruktion besonders schnell und einfach.

Für den Fall, dass die oberseitige Oberfläche der zweiten und der dritten Schicht eine im Wesentlichen stufenlose Oberflächenebene über dem ersten und zweiten Flächenbereich bilden, kann es besonders vorteilhaft sein, wenn zwischen der im Wesentlichen stufenlosen Oberflächenebene und der ersten Schicht eine Folie angeordnet ist. Dies hat den Vorteil, dass sich die erste Schicht und die dritte Schicht unabhängig voneinander bewegen und insbesondere ausdehnen und zusammenziehen können, ohne Risse oder Spannungen zu bilden. Ausdehnungen oder Schrumpfungen treten zum einen beim Aushärten von Fließestrich, der in beiden Schichten vorzugsweise Verwendung findet, und zum anderen beim Erwärmen und Abkühlen des Materials während der Heiz- bzw. Kühlzyklen auf.

Vorzugsweise weist die erfindungsgemäße Bodenkonstruktion keine Dämmstoffe auf, d.h. sie ist im Wesentlichen dämmstofffrei. Als Dämmstoffe werden hier jene Materialien bezeichnet, die einen Wärmeleitfähigkeitskoeffizienten λ, von weniger als 0,1 W·K⁻¹·m⁻¹ haben. Dadurch wird der Wärmedurchgangskoeffizient U der Bodenkonstruktion maximiert, sodass zum einen die Entstehung eines Kaltluftsees bzw. eines Wärmestaus vermieden wird und zum anderen ein möglichst guter Wärmeaustausch mit dem Unterboden stattfindet. Dies ist insbesondere dann sinnvoll, wenn der Unterboden eine Boden- bzw. Deckenplatte zwischen Geschossen ist, welche im Wesentlichen gleichermaßen geheizt bzw. gekühlt werden sollen. Schließlich hat die dämmstofffreie Bodenkonstruktion noch den Vorteil, dass die erste, zweite und dritte Schicht der Bodenkonstruktion höchsten Brandschutzanforderungen (Brennstoffklasse A nach DIN 4102, "nicht brennbarer Baustoff") genügen, wogegen üblicherweise verwendete Dämmstoffe unter die Brennstoffklasse B "brennbarer Baustoffe" fallen.

Die Lüftungswege, die die dritte Schicht aufweist, können zum einen mit einem raumexternen Lüftungssystem verbunden sein, das Frischluft in die Lüftungswege bläst. Vorzugsweise ist im zweiten Flächenbereich eine oberseitige Luftauslassöffnung vorgesehen, die mit den Lüftungswegen in der dritten Schicht verbunden ist, sodass Luft durch die oberseitige Luftauslassöffnung aus den Lüftungswegen herausgeführt werden kann. Die Luft des Lüftungssystems wird damit beim Durchgang durch die Lüftungswege in der dritten Schicht aufgeheizt bzw. gekühlt, je nachdem, ob das Heiz- und/oder Kühlsystem die dritte Schicht auf eine Temperatur ober- oder unterhalb der Temperatur der durchgeführten Luft heizt bzw. kühlt. Die oberseitige Luftauslassöffnung wird vorzugsweise in Form eines länglichen nach oben offenen Lüftungsschlitzes vor einer Fensterfront angeordnet, sodass ein vertikal aufsteigender Luftschleier vor der Fensterfront durch die austretende Luft gebildet wird.

Alternativ oder in Kombination mit einem raumexternen Lüftungssystem kann auch ein rauminternes Lüftungssystem mit den Lüftungswegen verbunden sein. Dabei ist beabstandet von der Luftauslassöffnung eine oberseitige Lufteinlassöffnung im zweiten Flächenbereich vorgesehen, wobei die Lufteinlassöffnung mit den Lüftungswegen verbunden ist und ein Ventilator unterhalb der Lufteinlassöffnung anbringbar ist, sodass Luft durch die Lufteinlassöffnung in die Lüftungswege hineingeführt und durch die oberseitige Luftauslassöffnung aus den Lüftungswegen herausgeführt werden kann. Damit kann eine rauminterne Luftumwälzung stattfinden, wobei der Luftkreislauf durch die warmen oder kalten Lüftungswege der dritten Schicht geführt wird. In Kombination mit einem raumexternen Lüftungssystem kann beispielsweise mit einer Regelklappe gesteuert werden, in welchen Ausmaß jeweils Frischluft des raumexternen Lüftungssystems zugeführt oder eine rauminterne Luftumwälzung stattfinden soll.

Gemäß einem zweiten Aspekt der Erfindung wird ein Verfahren zum Aufbauen einer zuvor beschriebenen Bodenkonstruktion auf einem Unterboden mit den folgenden Schritten bereitgestellt:
a) Abstützen der zweiten Schicht als Trägerschicht gegen den Unterboden mit einer Mehrzahl von über die Fläche verteilten Stützbeinen, um unterhalb der zweiten Schicht einen zusammenhängenden Hohlraum in dem ersten und zweiten Flächenbereich über dem Unterboden zu erhalten,
   wobei die zweite Schicht (9) zwischen dem ersten Flächenbereich (13) und dem zweiten Flächenbereich (15) derart abgestuft wird, dass die oberseitige Oberfläche der zweiten Schicht (9) im zweiten Flächenbereich (15) niedriger liegt als die oberseitige Oberfläche der zweiten Schicht (9) im ersten Flächenbereich (13),
b) Ausbilden der dritten Schicht im zweiten Flächenbereich durch Aufsetzen mindestens eines Profils für die Lüftungswege des Lüftungssystems im zweiten Flächenbereich auf der zweiten Schicht,
c) Verlegen der Leitungen des Heiz- und/oder Kühlsystems auf der zweiten Schicht im ersten Flächenbereich und auf der dritten Schicht im zweiten Flächenbereich,
d) Füllen von Zwischenräumen in der dritten Schicht zwischen den Lüftungswegen des Lüftungssystems mit einem aushärtbarem Füllmaterial wie etwa Fließ-, Gips-Anhydrid- und/oder Zementestrich, sodass die dritte Schicht und die zweite Schicht eine im Wesentlichen stufenlose Oberflächenebene über dem ersten und zweiten Flächenbereich ausbilden, und
e) Ausbilden der ersten Schicht im ersten und zweiten Flächenbereich durch Füllen von Zwischenräumen zwischen den Leitungen des Heiz- und/oder Kühlsystems mit einem aushärtbarem Füllmaterial wie etwa Fließ-, Gips-Anhydrid- und/oder Zementestrich.

Durch dieses Verfahren zum Aufbauen wird besonders einfach und schnell eine der zuvor beschriebenen Bodenkonstruktionen erreicht, die die bereits dargestellten Vorteile gegenüber bekannten Konstruktionen bietet.

Die einzelnen Verfahrensschritte a) bis e) müssen nicht in der angegebenen Reihenfolge durchgeführt werden. Beispielsweise können die Schritte d) und e) des Füllens von Zwischenräumen in der dritten Schicht und des Ausbildens der ersten Schicht in einem Schritt durchgeführt werden. Dadurch wird das Aufbauen beschleunigt und effizienter.

In einer alternativen Ausführungsform können die Schritte d) und e) des Füllens von Zwischenräumen in der dritten Schicht und des Ausbildens der ersten Schicht in separaten Schritten durchgeführt werden. Dies hat wiederum den Vorteil, dass die erste Schicht und die dritte Schicht separat ausgebildet werden können. Sofern die Schritte d) und e) nämlich separat durchgeführt werden, ist es vorteilhaft, wenn der Schritt d) des Füllens von Zwischenräumen in der dritten Schicht vor dem Schritt c) des Verlegens der Leitungen des Heiz- und/oder Kühlsystems durchgeführt wird, nach einem Aushärten des Füllmaterials der dritten Schicht eine Folie über die im Wesentlichen stufenlose Oberflächenebene über dem ersten und zweiten Flächenbereich verlegt wird, und dann erst die Schritte c) und e) des Verlegens der Leitungen des Heiz- und/oder Kühlsystems und des Ausbildens der ersten Schicht durchgeführt werden.

Um das Verlegen und Fixieren der Leitungen des Heiz- und/oder Kühlsystems zu erleichtern, kann vor dem Schritt des Verlegens der Leitungen des Heiz- und/oder Kühlsystems ein Baustahlgewebe auf der zweiten Schicht im ersten Flächenbereich und auf der dritten Schicht im zweiten Flächenbereich verlegt werden. Das Baustahlgewebe stabilisiert darüber hinaus das Füllmaterial, wie etwa den Fließ-, Gips-Anhydrid- und/oder Zementestrich, der ersten Schicht.

Wie oben bereits erläutert, erlaubt es die zwischen der ersten und dritten bzw. zweiten Schicht angeordnete Folie, dass sich die erste und dritte Schicht gegeneinander verschieben können, insbesondere bei Ausdehnungen oder Schrumpfungen. Dadurch können Spannungen und Risse vermieden werden. Ausdehnungen oder Schrumpfungen treten zum einen beim Aushärten von Estrich, der in beiden Schichten vorzugsweise Verwendung findet, und zum anderen beim Erwärmen und Abkühlen des Materials während der Heiz- bzw. Kühlzyklen auf.

Im Folgenden wird ein vorteilhaftes Ausführungsbeispiel anhand der beiliegenden Figuren näher erläutert.
Figur 1 zeigt eine perspektivische Schnittansicht einer bevorzugten Ausführungsform der erfindungsgemäßen Bodenkonstruktion auf einem Unterboden eines Raums.
Figur 2 zeigt eine detaillierte Querschnittsansicht einer bevorzugten Ausführungsform der erfindungsgemäßen Bodenkonstruktion auf einem Unterboden.
Figur 3 zeigt eine detaillierte Querschnittsansicht einer bevorzugten Ausführungsform der erfindungsgemäßen Bodenkonstruktion auf einem Unterboden mit einem Stufenstützbein.
Figur 4 zeigt eine detaillierte Querschnittsansicht einer nicht erfindungsgemäßen Ausführungsform der Bodenkonstruktion auf einem Unterboden, bei der die Trägerschicht nicht abgestuft ist.
Figur 5 zeigt eine detaillierte Längsschnittsansicht einer mit einem raumexternen Lüftungssystem verbundenen bevorzugten Ausführungsform der erfindungsgemäßen Bodenkonstruktion auf einem Unterboden.
Figur 6 zeigt eine detaillierte Längsschnittsansicht einer mit einem rauminternen Lüftungssystem verbundenen bevorzugten Ausführungsform der erfindungsgemäßen Bodenkonstruktion auf einem Unterboden.
Figur 7 zeigt eine perspektivische Seitenansicht eines Stufenstützbeins, das für den Bereich der Abstufung zwischen dem ersten und zweiten Flächenbereich vorgesehen ist.

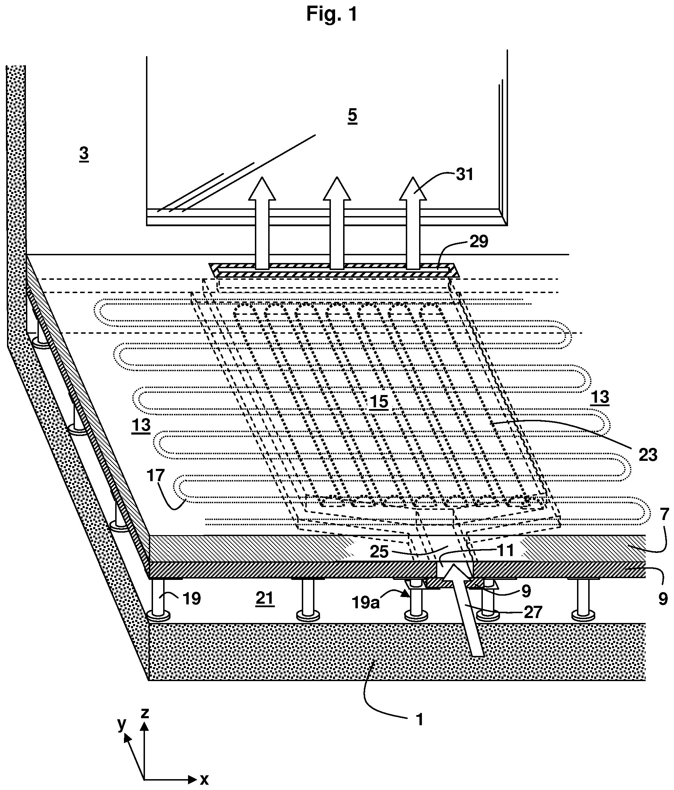

Figur 1 zeigt einen Raum mit einem Unterboden 1 und einer Außenwand 3 mit einer Fensterfront 5. Auf dem Unterboden 1 ist eine Bodenkonstruktion aufgebaut, die sich vollflächig über den Unterboden 1 bis zur Außenwand 3 erstreckt.

Die Bodenkonstruktion ist aus einer ersten Schicht 7, einer zweiten Schicht 9 und einer dritten Schicht 11 aufgebaut und bildet einen ersten Flächenbereich 13 und einen zweiten Flächenbereich 15 aus. Der erste Flächenbereich 13 weist nur die erste Schicht 7 und die zweite Schicht 9 auf, wogegen im zweiten Flächenbereich 15 zwischen der ersten Schicht 7 und zweiten Schicht 9 die dritte Schicht 11 angeordnet ist.

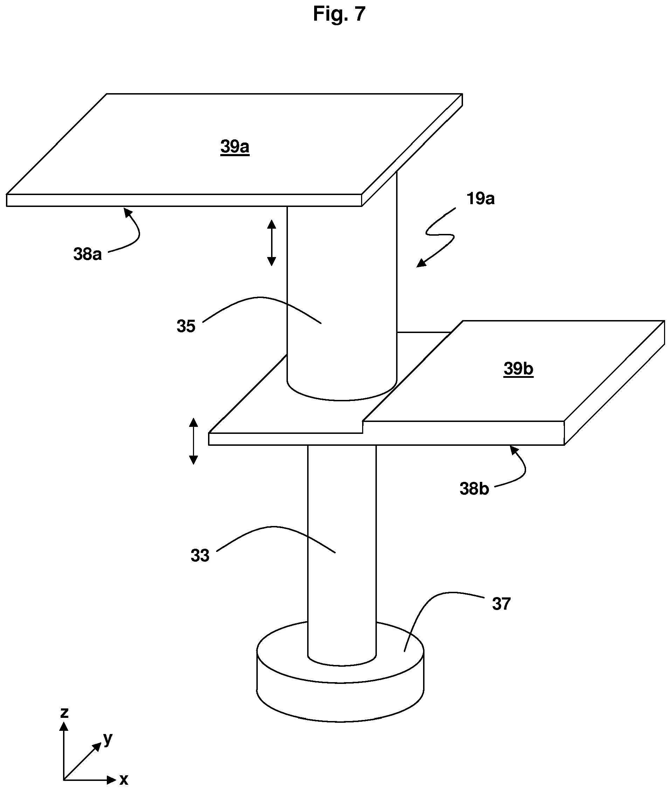

Die erste Schicht 7 ist oberhalb der zweiten Schicht 9 angeordnet und Leitungen 17 eines Heiz- und/oder Kühlsystems verlaufen in der ersten Schicht 7. Die zweite Schicht 9 ist eine zwischen dem ersten Flächenbereich 13 und zweiten Flächenbereich 15 abgestufte Trägerschicht, die unterseitig mit einer Mehrzahl von über die Fläche des Unterbodens 1 verteilten Stützbeinen 19 verbunden ist, die die zweite Schicht 9 beabstandet gegen den Unterboden 1 abstützen. Dadurch wird unterhalb der zweiten Schicht 9 ein zusammenhängender Hohlraum 21 über dem Unterboden 1 erhalten. Für den Bereich der Abstufung zwischen dem ersten Flächenbereich 13 und dem zweiten Flächenbereich 15 sind vorzugsweise Stufenstützbeine 19a vorgesehen, die im Detail in Figur 7 dargestellt sind.

Die dritte Schicht 11 im zweiten Flächenbereich 15 weist Lüftungswege 23 eines Lüftungssystems auf. Die Lüftungswege 23 verlaufen horizontal und parallel zueinander durch die dritte Schicht 11 auf die Fensterfront 5 zu. Auf der der Fensterfront 5 abgewandten Seite mündet ein Lüftungsschacht 25 eines Lüftungssystems in die dritte Schicht 11, der dazu ausgestaltet ist, einen Luftstrom 27 in die Lüftungswege 23 und damit in Richtung Fensterfront 5 zu führen. Vor der Fensterfront 5 erstreckt sich eine oberseitige Luftauslassöffnung 29 in Form eines länglichen nach oben offenen Lüftungsschlitzes, der mit den Lüftungswegen 23 verbunden ist. Durch den Lüftungsschlitz 29 tritt vor der Fensterfront ein vertikal nach oben gerichteter Luftschleier 31 aus der dritten Schicht 11 aus. Bei eingeschaltetem Heiz- bzw. Kühlsystem, dessen Leitungen 17 durch die erste Schicht 7 verlaufen, nimmt der Luftstrom 27 beim Durchlauf durch die Lüftungswege 23 der dritten Schicht 11 die von der ersten Schicht 7 nach unten hin abgegebene Wärme bzw. Kälte auf und führt sie als vertikaler Warm- bzw. Kaltluftschleier vor die Fensterfront 5.

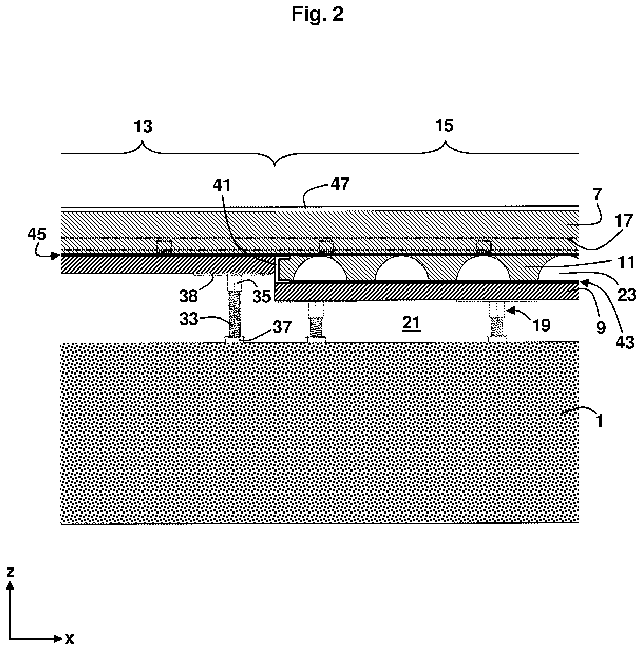

In Figur 2 ist die Schichtstruktur der erfindungsgemäßen Bodenkonstruktion genauer dargestellt. Die Querschnittsansicht ist in Richtung des Luftstroms 27 auf die Fensterfront 5 zu gerichtet. Der Flächenbereich links von der Abstufung in der zweiten Schicht 9 ist der erste Flächenbereich 13 und der Flächenbereich rechts von der Abstufung in der zweiten Schicht 9 ist der zweite Flächenbereich 15. In dieser Ausführungsform ist die Schichtdicke der zweiten Schicht 9 im ersten Flächenbereich 13 und im zweite Flächenbereich 15 gleich und es ergibt sich sowohl an der oberseitigen Oberfläche der zweiten Schicht 9 als auch an der unterseitigen Oberfläche der zweiten Schicht 9 eine Abstufung. Die Stützbeine 19 im ersten Flächenbereich 13 sind daher länger ausgestaltet bzw. eingestellt als im zweiten Flächenbereich 15. Die Stützbeine 19 weisen ein unteres Fußteil 33 und eine obere Stützhülse 35 auf. Das Fußteil 33 steht mit einem Fuß 37 auf dem Unterboden 1 und die Stützhülse 35 ist koaxial über eine Gewindeverschraubung mit dem Fußteil 33 verbunden und kann bei einer gewünschten Position fixiert werden, um eine benötigte Gesamtlänge des Stützbeins 19 zu erreichen. Am oberen Ende ist die Stützhülse 35 mit einer Stützplatte 38 verbunden, die eine oberseitige Stützfläche 39 bildet, die mit der unterseitigen Oberfläche der zweiten Schicht 9 flächig in Kontakt steht und diese von unten stützt.

Der durch die Abstufung an der oberseitigen Oberfläche der zweiten Schicht 9 abgesenkte zweite Flächenbereich 15 wird durch die dritte Schicht 11 gefüllt, die Lüftungswege 23 des Lüftungssystems enthält. Die dritte Schicht 11 weist ein eierkarton-artiges Profil für die Lüftungswege 23 des Lüftungssystems auf sowie Fließestrich, der die Zwischenräume zwischen den Lüftungswegen 23 füllt. Seitlich ist die dritte Schicht durch ein U-Profil 41 eingefasst, das sich umlaufend entlang der Abstufung der zweiten Schicht 9 erstreckt. Unterhalb der durch das eierkarton-artige Profil gebildeten Lüftungswege 23 ist eine Dichtfolie 43 angeordnet, die die Lüftungswege 23 nach unten hin abdichtet.

Die oberseitigen Oberflächen der dritten Schicht 11 im zweiten Flächenbereich 15 und der zweiten Schicht im ersten Flächenbereich 13 bilden eine im Wesentlichen stufenlose Oberflächenebene, auf der eine Folie 45 angeordnet ist. Auf der Folie 45 liegt dann vollflächig die erste Schicht 7. Oberhalb der ersten Schicht 7 ist schließlich eine Trittschicht 47 wie beispielsweise Parkett, Fliesen, Laminat, PCV, Teppich oder Ähnliches verlegt. Innerhalb der ersten Schicht 7 ist eine Leitung 17 eines Heiz- und/oder Kühlsystems gestrichelt angedeutet.

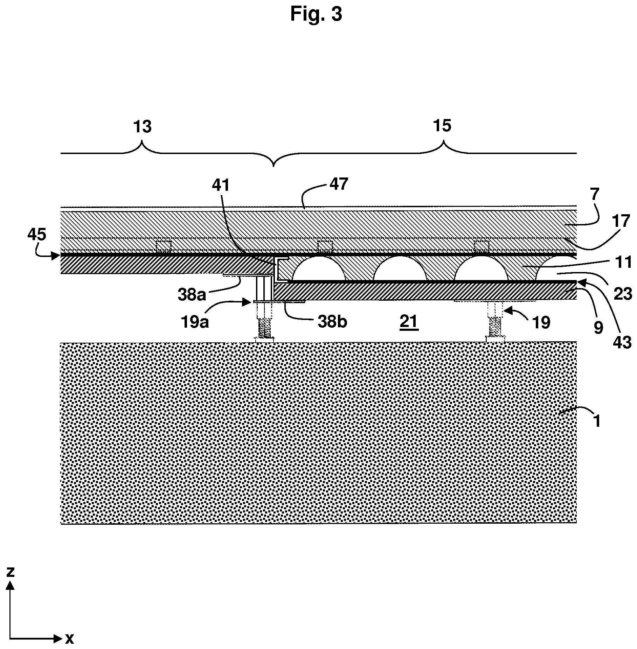

Im Unterschied zur Figur 2 zeigt die Figur 3 die Bodenkonstruktion mit einem Stufenstützbein 19a, das gegenüber den übrigen Stützbeinen 19 besonders ausgestaltet ist und im Bereich der Abstufung zwischen dem ersten Flächenbereich 13 und dem zweiten Flächenbereich 15 angeordnet ist. Wie die übrigen Stützbeine 19 weist auch das Stufenstützbein 19a, wie auch in Figur 7 größer dargestellt, ein unteres Fußteil 33 und eine obere Stützhülse 35 auf. Das Fußteil 33 steht mit einem Fuß 37 auf dem Unterboden 1 und die Stützhülse 35 ist koaxial über eine Gewindeverschraubung mit dem Fußteil 33 verbunden und kann bei einer gewünschten Position fixiert werden, um eine benötigte Gesamtlänge des Stufenstützbeins 19a zu erreichen. Am oberen Ende ist die Stützhülse 35 fest mit einer ersten Stützplatte 38a verbunden, die eine oberseitige Stützfläche 39a bildet, die mit der unterseitigen Oberfläche der zweiten Schicht 9 im ersten Flächenbereich 13 flächig in Kontakt steht und dort diese von unten stützt. Eine zweite Stützplatte 38b ist mit der Stützhülse 35 verbunden und kann bei einer gewünschten Höhe relativ zur Stützhülse 35 fixiert werden. Die zweite Stützplatte 38b bildet eine oberseitige Stützfläche 39b, die mit der unterseitigen Oberfläche der zweiten Schicht 9 im zweiten Flächenbereich 15 flächig in Kontakt steht und dort diese von unten stützt. Das Stufenstützbein 19a kann daher die in Figur 2 gezeigten zwei einzelnen im Bereich der Abstufung zwischen dem ersten Flächenbereich 13 und dem zweiten Flächenbereich 15 angeordneten Stützbeine 19 ersetzen, sodass ein Stützbein 19 erspart wird.

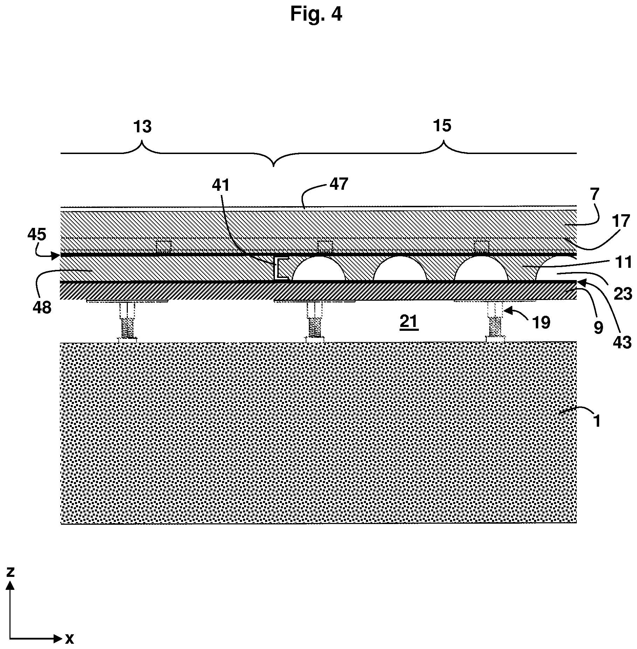

Die in Figur 4 gezeigte, nicht erfindungsgemäße Bodenkonstruktion weist eine Trägerschicht 9 auf, die nicht zwischen dem ersten Flächenbereich 13 und dem zweiten Flächenbereich 15 abgestuft ist. Im ersten Flächenbereich 13 ist dabei der Zwischenraum 48 zwischen der ersten Schicht 7 und der zweiten Schicht 9 mit einem aushärtbaren Füllmaterial, wie etwa den Ausgleichs-, Fließ-, Gips-Anhydrid- und/oder Zementestrich aufgefüllt. Die Dichtfolie 43 zum Abdichten der Lüftungswege 23 im zweiten Flächenbereich 15 nach unten kann sich dann auch bis über den ersten Flächenbereich 13 erstrecken, sodass das Füllmaterial zum Füllen des Zwischenraums 48 auf die Dichtfolie 43 aufgebracht werden kann. Nach dem Füllen des Zwischenraums 48 bilden der gefüllte Zwischenraum 48 und die dritte Schicht 11 eine im Wesentlichen stufenlose Oberflächenebene über dem ersten Flächenbereich 13 und dem zweiten Flächenbereich 15. Die Folie 45 erstreckt sich dann im ersten Flächenbereich 13 zwischen der ersten Schicht 7 und dem aufgefüllten Zwischenraum 48. Auf die Folie 45 wird dann die erste Schicht 7 aufgebracht. Wenngleich der Verbrauch an aushärtbarem Füllmaterial bei dieser Ausführungsform erhöht ist, kann eine solche Ausführungsform ohne Abstufung der Trägerschicht dann von Vorteil sein, wenn eine Abstufung der Trägerschicht nicht möglich oder kostenintensiver ist.

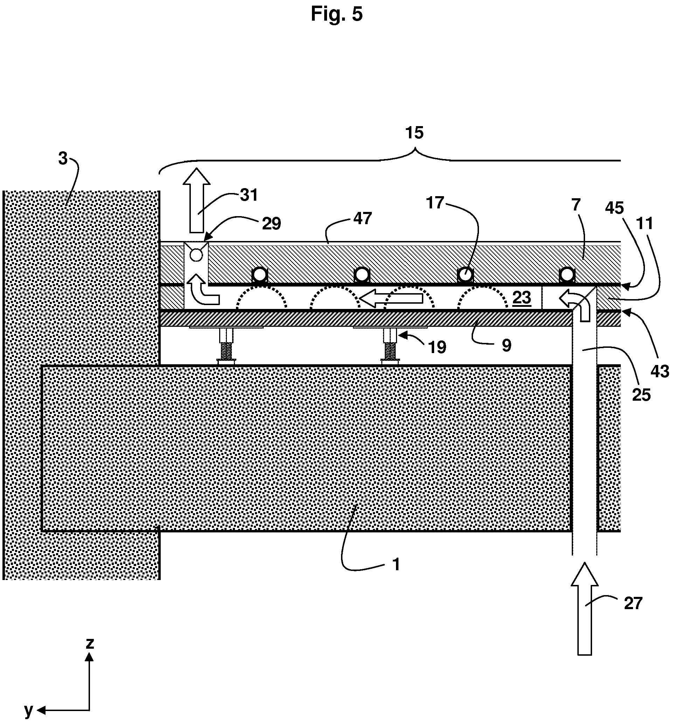

Die Längsschnittsansicht von Figur 5 verläuft im Wesentlichen durch den zweiten Flächenbereich 15 der Bodenkonstruktion und zeigt den Luftstrom 27 durch die Bodenkonstruktion. Der Lüftungsschacht 25 eines raumexternen Lüftungssystems führt bei dieser Ausführungsform der Bodenkonstruktion vertikal durch den Unterboden 1, den Hohlraum 21 und die zweite Schicht 9 in die dritte Schicht 11. In der dritten Schicht 11 ist der Lüftungsschacht 25 abgewinkelt und verläuft darin horizontal auf die Außenwand 3 zu und mündet in die Lüftungswege 23. Die parallel zueinander verlaufenden Lüftungswege 23, die durch das eierkarton-artige Profil der dritten Schicht 11 gebildet sind, haben auch seitliche Verbindungen zueinander, die durch gestrichelte Halbkreise angedeutet sind. Kurz vor der Außenwand 3 führt der Lüftungsschlitz 29 vertikal nach oben durch die Folie 45, die erste Schicht 7 und die Trittschicht 47 in den Innenraum. Der Luftstrom 27 bildet sich dadurch im Innenraum als vertikaler Luftschleier 31 vor der Außenwand 3 mit der Fensterfront 5 aus.

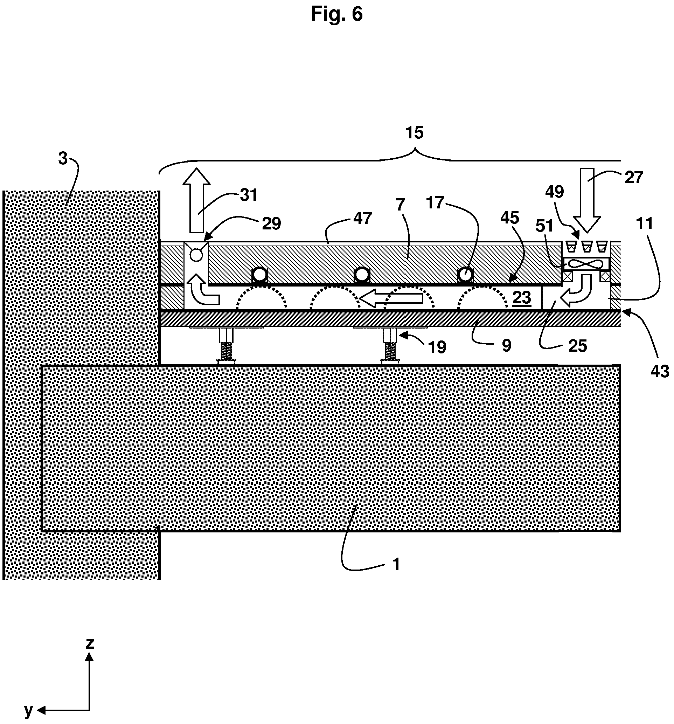

Figur 6 zeigt eine Bodenkonstruktion mit Lüftungswegen 23, die mit einem rauminternen Lüftungssystem verbunden sind. Dabei ist beabstandet von der Luftauslassöffnung 29 eine oberseitige Lufteinlassöffnung 49 im zweiten Flächenbereich 15 vorgesehen. Die Lufteinlassöffnung 49 ist dabei mit den Lüftungswegen 23 verbunden und ein Ventilator 51 kann unterhalb der Lufteinlassöffnung 49 angebracht werden. Durch den Ventilator 51 kann Luft durch die Lufteinlassöffnung 49 angesaugt und in die Lüftungswege 23 geblasen und durch den Lüftungsschlitz 29 herausgeführt werden. Die in Figur 6 gezeigte Ausführungsform kann auch mit der in Figur 5 gezeigten Ausführungsform kombiniert werden, wobei beispielsweise mit einer Regelklappe gesteuert werden kann, in welchen Ausmaß jeweils Frischluft des raumexternen Lüftungssystems zugeführt oder eine rauminterne Luftumwälzung stattfinden soll.

Durch die in den Figuren dargestellte vorteilhafte Ausführungsform der erfindungsgemäßen Bodenkonstruktion werden insbesondere durch den unterhalb der zweiten Schicht 9 und oberhalb des Unterbodens 1 erhaltenen zusammenhängenden Hohlraum 21 verbesserte Verkabelungsmöglichkeiten erreicht, wobei Strom- und/oder Datenkabel, Schläuche oder dergleichen in beliebige Richtungen verlegt werden können. Ein nachträgliches Auf- oder Umrüsten der Bodenkonstruktion mit Versorgungsleitungen ist gegenüber bekannten Systemen stark vereinfacht, da die Verlegung von Versorgungsleitungen nicht an die Position von Unterflurkanälen gebunden ist.

## Patentansprüche

1. Bodenkonstruktion zum Aufbauen auf einem Unterboden (1), wobei die Bodenkonstruktion
in einem ersten Flächenbereich (13) mindestens eine erste Schicht (7) und eine zweite Schicht (9) aufweist und
in einem zweiten Flächenbereich (15) zwischen der ersten Schicht (7) und der zweiten Schicht (9) eine dritte Schicht (11) aufweist, wobei
die erste Schicht (7) oberhalb der zweiten Schicht (9) angeordnet ist und Leitungen (17) eines Heiz- und/oder Kühlsystems in der ersten Schicht (7) verlaufen und
die dritte Schicht (11) Lüftungswege (23) eines Lüftungssystems aufweist,
**dadurch gekennzeichnet, dass**
die zweite Schicht (9) eine Trägerschicht ist, die
unterseitig mit einer Mehrzahl von über die Fläche verteilten Stützbeinen (19, 19a) verbunden ist, die dazu ausgestaltet sind, die zweite Schicht (9) beabstandet gegen den Unterboden (1) abzustützen, um unterhalb der zweiten Schicht (9) einen zusammenhängenden Hohlraum (21) in dem ersten Flächenbereich (13) und dem zweiten Flächenbereich (15) über dem Unterboden (1) zu erhalten, wobei die zweite Schicht (9) zwischen dem ersten Flächenbereich (13) und dem zweiten Flächenbereich (15) derart abgestuft ist, dass die oberseitige Oberfläche der zweiten Schicht (9) im zweiten Flächenbereich (15) niedriger liegt als die oberseitige Oberfläche der zweiten Schicht (9) im ersten Flächenbereich (13).

2. Bodenkonstruktion nach Anspruch 1, wobei die erste Schicht (7) ein aushärtbares Füllmaterial wie etwa Fließ, Gips-Anhydrid- und/oder Zementestrich aufweist, das Zwischenräume zwischen den Leitungen (17) des Heizund/oder Kühlsystems füllt.

3. Bodenkonstruktion nach einem der vorhergehenden Ansprüche, wobei mindestens ein Stützbein (19, 19a) längenverstellbar ausgestaltet ist.

4. Bodenkonstruktion nach einem der vorhergehenden Ansprüche, wobei mindestens ein Stützbein (19a) im Bereich der Abstufung zwischen dem ersten Flächenbereich (13) und dem zweiten Flächenbereich (15) angeordnet und mit einer ersten Stützfläche (39a) und einer zweiten Stützfläche (39b) verbunden ist, wobei sich die erste Stützfläche (39a) in Kontakt mit der unterseitigen Oberfläche der zweiten Schicht (9) in Richtung des ersten Flächenbereichs (13) und sich die zweite Stützfläche (39b) in Kontakt mit der unterseitigen Oberfläche der zweiten Schicht (9) in Richtung des zweiten Flächenbereichs (15) erstreckt.

5. Bodenkonstruktion nach Anspruch 4, wobei die erste Stützfläche (39a) durch eine oberseitige Oberfläche einer sich horizontal erstreckenden ersten Stützplatte (38a) und die zweite Stützfläche (39a) durch eine oberseitige Oberfläche einer sich horizontal erstreckenden zweiten Stützplatte (38b) gebildet wird, wobei die erste Stützplatte (38a) oberhalb der zweiten Stützplatte (38b) mit dem Stützbein (19a) verbunden ist.

6. Bodenkonstruktion nach einem der vorhergehenden Ansprüche, wobei die dritte Schicht (11) mindestens ein Profil für die Lüftungswege (23) des Lüftungssystems und ein aushärtbares Füllmaterial wie etwa Fließ-, Gips-Anhydrid- und/oder Zementestrich aufweist, das Zwischenräume zwischen den Lüftungswegen (23) des Lüftungssystems füllt.

7. Bodenkonstruktion nach einem der vorhergehenden Ansprüche, wobei die zweite Schicht (9) und dritte Schicht (11) eine im Wesentlichen stufenlose Oberflächenebene über dem ersten Flächenbereich (13) und zweiten Flächenbereich (15) bilden.

8. Bodenkonstruktion nach Anspruch 7, wobei zwischen der im Wesentlichen stufenlosen Oberflächenebene über dem ersten Flächenbereich (13) und zweiten Flächenbereich (15) und der ersten Schicht (7) eine Folie (45) angeordnet ist.

9. Bodenkonstruktion nach einem der vorhergehenden Ansprüche, wobei die Bodenkonstruktion im Wesentlichen dämmstofffrei ist.

10. Bodenkonstruktion nach einem der vorhergehenden Ansprüche, wobei eine oberseitige Luftauslassöffnung (29) im zweiten Flächenbereich (15) vorgesehen ist, wobei die Luftauslassöffnung (29) mit den Lüftungswegen (23) in der dritten Schicht (11) verbunden ist und Luft durch die oberseitige Luftauslassöffnung (29) aus den Lüftungswegen (23) herausgeführt werden kann.

11. Bodenkonstruktion nach Anspruch 10, wobei beabstandet von der Luftauslassöffnung (29) eine oberseitige Lufteinlassöffnung (49) im zweiten Flächenbereich (15) vorgesehen ist, wobei die Lufteinlassöffnung (49) mit den Lüftungswegen (23) verbunden ist und ein Ventilator (51) unterhalb der Lufteinlassöffnung (49) anbringbar ist, sodass Luft durch die Lufteinlassöffnung (49) in die Lüftungswege (23) hineingeführt und durch die oberseitige Luftauslassöffnung (29) aus den Lüftungswegen (23) herausgeführt werden kann.

12. Verfahren zum Aufbauen einer Bodenkonstruktion nach einem der vorhergehenden Ansprüche auf einem Unterboden (1) mit den folgenden Schritten:
a) Abstützen der zweiten Schicht (9) als Trägerschicht gegen den Unterboden (1) mit einer Mehrzahl von über die Fläche verteilten Stützbeinen (19, 19a), um unterhalb der zweiten Schicht (9) einen zusammenhängenden Hohlraum (21) in dem ersten Flächenbereich (13) und zweiten Flächenbereich (15) über dem Unterboden (1) zu erhalten, wobei die zweite Schicht (9) zwischen dem ersten Flächenbereich (13) und dem zweiten Flächenbereich (15) derart abgestuft wird, dass die oberseitige Oberfläche der zweiten Schicht (9) im zweiten Flächenbereich (15) niedriger liegt als die oberseitige Oberfläche der zweiten Schicht (9) im ersten Flächenbereich (13),
b) Ausbilden der dritten Schicht (11) durch Aufsetzen mindestens eines Profils für die Lüftungswege (23) des Lüftungssystems im zweiten Flächenbereich (15) auf der zweiten Schicht (9),
c) Verlegen der Leitungen (17) des Heiz- und/oder Kühlsystems auf der zweiten Schicht (9) im ersten Flächenbereich (13) und auf der dritten Schicht (11) im zweiten Flächenbereich (15),
d) Füllen von Zwischenräumen in der dritten Schicht (11) zwischen den Lüftungswegen (23) des Lüftungssystems mit einem aushärtbarem Füllmaterial wie etwa Fließ-, Gips-Anhydrid- und/oder Zementestrich, sodass die dritte Schicht (11) und die zweite Schicht (9) eine im Wesentlichen stufenlose Oberflächenebene über dem ersten Flächenbereich (13) und dem zweiten Flächenbereich (15) ausbilden, und
e) Ausbilden der ersten Schicht (7) im ersten Flächenbereich (13) und zweiten Flächenbereich (15) durch Füllen von Zwischenräumen zwischen den Leitungen (17) des Heiz- und/oder Kühlsystems mit einem aushärtbarem Füllmaterial wie etwa Fließ-, Gips-Anhydrid- und/oder Zementestrich.

13. Verfahren nach Anspruch 12, wobei die Schritte d) und e) des Füllens von Zwischenräumen in der dritten Schicht (11) und des Ausbildens der ersten Schicht (7) in einem Schritt durchgeführt werden.

14. Verfahren nach Anspruch 12, wobei die Schritte d) und e) des Füllens von Zwischenräumen in der dritten Schicht (11) und des Ausbildens der ersten Schicht (7) in separaten Schritten durchgeführt werden.

15. Verfahren nach Anspruch 14, wobei der Schritt d) des Füllens von Zwischenräumen in der dritten Schicht (11) vor dem Schritt c) des Verlegens der Leitungen (17) des Heiz- und/oder Kühlsystems durchgeführt wird,
nach einem Aushärten des Füllmaterials der dritten Schicht (11) eine Folie (45) über die im Wesentlichen stufenlose Oberflächenebene über dem ersten Flächenbereich (13) und zweiten Flächenbereich (15) verlegt wird, und
dann die Schritte c) und e) des Verlegens der Leitungen (17) des Heiz- und/oder Kühlsystems und des Ausbildens der ersten Schicht (7) durchgeführt werden.

16. Verfahren nach einem der Ansprüche 12 bis 15, wobei vor dem Schritt des Verlegens der Leitungen (17) des Heiz- und/oder Kühlsystems ein Baustahlgewebe auf der zweiten Schicht (9) im ersten Flächenbereich (13) und auf der dritten Schicht (11) im zweiten Flächenbereich (15) verlegt wird.

## Claims

1. Floor construction for assembly on a subfloor (1), wherein the floor construction comprises
at least a first layer (7) and a second layer (9) in a first area portion (13) and
a third layer (11) between the first layer (7) and the second layer (9) in a second area portion (15), wherein
the first layer (7) is disposed above the second layer (9), and conduits (17) of a heating and/or cooling system extend in the first layer (7), and
the third layer (11) comprises ventilation paths (23) of a ventilation system,
**characterized in that**
the second layer (9) is a carrier layer, which carrier layer on its underside is connected to a plurality of support legs (19, 19a) configured to support the second layer (9) at a distance above the subfloor (1) to obtain a continuous hollow space (21) below the second layer in the first area portion (13) and in the second area portion (15) above the subfloor (1), wherein the second layer (9) is terraced between the first area portion (13) and the second area portion (15) in such a manner that the upper surface of the second layer (9) is in the second area portion (15) disposed below the upper surface of the second layer (9) in the first area portion (13).

2. Floor construction according to claim 1, wherein the first layer (7) comprises a curable filling material, such as flowing screed, gypsum - anhydrite screed and/or cement screed, which filling material fills spaces between the conduits (17) of the heating and/or cooling system.

3. Floor construction according to any of the preceding claims, wherein at least one support leg (19, 19a) is configured to be length adjustable.

4. Floor construction according to any of the preceding claims, wherein at least one support leg (19a) is disposed in the region of the terrace between the first area portion (13) and the second area portion (15) and is connected to a first support surface (39a) and to a second support surface (39b), wherein the first support surface (39a) extends in contact with the lower surface of the second layer (9) in the direction of the first area portion (13) and the second support surface (39b) extends in contact with the lower surface of the second layer (9) in the direction of the second area portion (15).

5. Floor construction according to claim 4, wherein the first support surface (39a) is formed by the upper surface of a horizontally extending first support plate (38a) and wherein the second support surface (39a) is formed by an upper surface of a horizontally extending second support plate (38b), wherein the first support plate (38a) is connected to the support leg (19a) above the second support plate (38b).

6. Floor construction according to any of the preceding claims, wherein the third layer (11) comprises at least a profile for the venting paths (23) of the venting system and a curable filling material, such as flowing screed, gypsum - anhydrite screed and/or cement screed, which filling material fills the spaces between the venting paths (23) of the venting system.

7. Floor construction according to any of the preceding claims, wherein the second layer (9) and the third layer (11) form over the first area portion (13) and the second area portion (15) an essentially stepless surface plane.

8. Floor construction according to claim 7, wherein between the essentially stepless surface plane and the first layer (7) a foil (45) is disposed over the first area portion (13) and the second area portion (15).

9. Floor construction according to any of the preceding claims, wherein the floor construction is essentially free of insulating materials.

10. Floor construction according to any of the preceding claims, wherein an upper air outlet opening (29) is provided in the second area portion (15), wherein the air outlet opening (29) is connected to the ventilation paths (23) in the third layer (11), and wherein air can be led away from the ventilation paths (23) through the upper air outlet opening (29).

11. Floor construction according to claim 10, wherein spaced apart from the air outlet opening (29) an upper air inlet opening (49) is provided in the second area portion (15), wherein the air inlet opening (49) is connected to the ventilation paths (23), and wherein a fan (51) is mountable below the air inlet opening (49) such that air can be introduced through the air inlet opening (49) into the ventilation paths (23) and further led away from the ventilation paths (23) through the upper air outlet opening (29).

12. Method for assembling a floor construction according to any of the preceding claims on a subfloor (1) comprising the following steps:
a) supporting the second layer (9) as a carrier layer on the subfloor (1) by a plurality of support legs (19, 19a) distributed over the area to obtain a continuous hollow space (21) below the second layer (9) and above the subfloor (1) in the first area portion (13) and in the second area portion (15), wherein the second layer (9) is terraced between the first area portion (13) and the second area portion (15) in such a manner that the upper surface of the second layer (9) in the second area portion (15) is disposed below the upper surface of the second layer (9) in the first area portion (13),
b) forming the third layer (11) by laying on at least a profile for the ventilation paths (23) of the ventilation system on the second layer (9) in the second area portion (15),
c) installing the conduits (17) of the heating and/or cooling system on the second layer (9) in the first area portion (13) and on the third layer (11) in the second area portion (15),
d) filling the spaces in the third layer (11) between the ventilation paths (23) of the ventilation system with curable filling material, such as flowing screed, gypsum - anhydrite screed and/or cement screed, such that the third layer (11) and the second layer (9) form an essentially stepless surface plane over the first area portion (13) and the second area portion (15), and
e) forming the first layer (7) in the first area portion (13) and the second area portion (15) by filling the spaces between the conduits (17) of the heating and/or cooling system with a curable filling material such as flowing screed, gypsum - anhydrite screed and/or cement screed.

13. Method according to claim 12, wherein the steps d) and e) of filling the spaces in the third layer (11) and of forming the first layer (7) are performed in one step.

14. Method according to claim 12, wherein the steps d) and e) of filling the spaces in the third layer (11) and of forming the first layer (7) are carried out in separate steps.

15. Method according to claim 14, wherein the step d) of filling spaces in the third layer (11) is carried out before step c) of installing the conduits (17) of the heating and/or cooling system,
wherein after curing of the filling material of the third layer (11) a foil (45) is laid over the essentially stepless surface plane over the first area portion (13) and the second area portion (15), and
whereafter the steps c) and e) of installing the conduits (17) of the heating and/or cooling systems and of forming the first layer (7) are carried out.

16. Method according to any of claims 12 to 15, wherein before the step of installing the conduits (17) of the heating and/or cooling system a steel wire fabric is laid on the second layer (9) over the first area portion and on the third layer (11) in the second area portion (15).

## Revendications

1. Structure de plancher destinée à être montée sur un soubassement (1), la structure de plancher présentant
dans une première partie de surface (13), au moins une première couche (7) et une deuxième couche (9) et
dans une deuxième partie de surface (15), une troisième couche (11) située entre la première couche (7) et la deuxième couche (9),
la première couche (7) étant disposée au-dessus de la deuxième couche (9) et des conduits (17) d'un système de chauffage et/ou de refroidissement s'étendant dans la première couche (7) et
la troisième couche (11) présentant des parcours de ventilation (23) d'un système de ventilation, **caractérisée en ce que**
la deuxième couche (9) est une couche de support reliée sur son côté inférieur à plusieurs jambes de soutien (19, 19a) réparties sur la surface et configurées pour maintenir la deuxième couche (9) à distance du soubassement (1) pour obtenir au-dessus du soubassement (1), dans la première partie de surface (13) et la deuxième partie de surface (15), une cavité continue (21) en dessous de la deuxième couche (9),
**en ce que** la deuxième couche (9) présente un gradin entre la première partie de surface (13) et la deuxième partie de surface (15) de telle sorte que dans la deuxième partie de surface (15), la surface supérieure de la deuxième couche (9) est située plus bas que la surface supérieure de la deuxième couche (9) dans la première partie de surface (13).

2. Structure de plancher selon la revendication 1, dans laquelle la première couche (7) présente un matériau durcissable de charge, par exemple une chape coulée, de sulfate de calcium anhydride et/ou de ciment qui remplit les espaces intermédiaires entre les conduits (17) du système de chauffage et/ou de refroidissement.

3. Structure de plancher selon l'une des revendications précédentes, dans laquelle au moins une jambe de soutien (19, 19a) est ajustable en longueur.

4. Structure de plancher selon l'une des revendications précédentes, dans laquelle au moins une jambe de soutien (19a) est disposée au niveau du gradin entre la première partie de surface (13) et la deuxième partie de surface (15) et est reliée à une première surface de soutien (39a) et à une deuxième surface de soutien (39b), la première surface de soutien (39a) étant en contact avec la surface inférieure de la deuxième couche (9) en direction de la première partie de surface (13) et la deuxième surface de soutien (39b) étant en contact avec la surface inférieure de la deuxième couche (9) en direction de la deuxième partie de surface (15).

5. Structure de plancher selon la revendication 4, dans laquelle la première surface de soutien (39a) est formée par une surface supérieure d'une première plaque de soutien (38a) s'étendant à l'horizontale et la deuxième surface de soutien (39a) par la surface supérieure d'une deuxième plaque de soutien (38b) s'étendant à l'horizontale, la première plaque de soutien (38a) étant reliée à la jambe de soutien (19a) au-dessus de la deuxième plaque de soutien (38b).

6. Structure de plancher selon l'une des revendications précédentes, dans laquelle la troisième couche (11) présente au moins un profilé pour les parcours de ventilation (23) du système de ventilation et un matériau durcissable de charge, par exemple une chape coulée, de sulfate de calcium anhydride et/ou de ciment, qui remplit les espaces intermédiaires entre le parcours de ventilation (23) du système de ventilation.

7. Structure de plancher selon l'une des revendications précédentes, dans laquelle la deuxième couche (9) et la troisième couche (11) forment une surface plane essentiellement sans gradin au-dessus de la première partie de surface (13) et de la deuxième partie de surface (15).

8. Structure de plancher selon la revendication 7, dans laquelle un film (45) est disposé entre la première couche (7) et la surface plane essentiellement sans gradin située au-dessus de la première partie de surface (13) et de la deuxième partie de surface (15).

9. Structure de plancher selon l'une des revendications précédentes, dans laquelle la structure de plancher est essentiellement exempte de matériau isolant.

10. Structure de plancher selon l'une des revendications précédentes, dans laquelle une ouverture supérieure (29) de sortie d'air est prévue dans la deuxième partie de surface (15), l'ouverture (29) de sortie d'air étant reliée aux parcours de ventilation (23) dans la troisième couche (11) et l'air pouvant être extrait des parcours de ventilation (23) par l'ouverture supérieure (29) de sortie d'air.

11. Structure de plancher selon la revendication 10, dans laquelle la distance de l'ouverture (29) de sortie d'air est prévue dans la deuxième partie de surface (15) une ouverture supérieure (49) d'entrée d'air, l'ouverture (49) d'entrée d'air étant reliée aux parcours de ventilation (23) et un ventilateur (51) pouvant être placé en dessous de l'ouverture (49) d'entrée d'air de telle sorte que de l'air soit injecté par l'ouverture (49) d'entrée d'air dans les parcours de ventilation (23) et puisse être extrait des parcours de ventilation (23) par l'ouverture supérieure (29) de sortie d'air.

12. Procédé de montage d'une structure de plancher selon l'une des revendications précédentes sur un soubassement (1), le procédé présentant les étapes suivantes :
a) soutien de la deuxième couche (9) servant de couche de support sur le soubassement (1) à l'aide de plusieurs jambes de soutien (19, 19a) réparties sur la surface, de manière à obtenir en dessous de la deuxième couche (9) une cavité continue (21) dans la première partie de surface (13) et la deuxième partie de surface (15) au-dessus du soubassement (1), la deuxième couche (9) présente un gradin entre la première partie de surface (13) et la deuxième partie de surface (15) de telle sorte que dans la deuxième partie de surface (15), la surface supérieure de la deuxième couche (9) est située plus bas que la surface supérieure de la deuxième couche (9) dans la première partie de surface (13),
b) formation de la troisième couche (11) en plaçant sur la deuxième couche (9) au moins un profilé pour les parcours de ventilation (23) du système de ventilation dans la deuxième partie de surface (15),
c) pose des conduits (17) du système de chauffage et/ou de refroidissement sur la deuxième couche (9) dans la première partie de surface (13) et sur la troisième couche (11) dans la deuxième partie de surface (15),
d) remplissage des espaces intermédiaires de la troisième couche (11) entre les parcours de ventilation (23) du système de ventilation à l'aide d'un matériau durcissable de charge, par exemple une chape coulée, de sulfate de calcium anhydride et/ou de ciment, de telle sorte que la troisième couche (11) et la deuxième couche (9) forment une surface plane essentiellement sans gradin au-dessus de la première partie de surface (13) et de la deuxième partie de surface (15) et
e) formation de la première couche (7) dans la première partie de surface (13) et la deuxième partie de surface (15) par remplissage des espaces intermédiaires après les conduits (17) du système de chauffage et/ou de refroidissement par un matériau durcissable de charge, par exemple une chape coulée, de sulfate de calcium anhydride et/ou de ciment.

13. Procédé selon la revendication 12, dans lequel les étapes d) et e) de remplissage des espaces intermédiaires de la troisième couche (11) et de formation de la première couche (7) sont réalisées en une seule étape.

14. Procédé selon la revendication 12, dans lequel les étapes d) et e) de remplissage des espaces intermédiaires de la troisième couche (11) et de formation de la première couche (7) sont réalisées en étapes séparées.

15. Procédé selon la revendication 14, dans lequel l'étape d) de remplissage des espaces intermédiaires de la troisième couche (11) est réalisée avant l'étape c) de pose des conduits (17) du système de chauffage et/ou de refroidissement,
après le durcissement du matériau de charge de la troisième couche (11), un film (45) est posé au-dessus de la surface plane essentiellement sans gradin qui surmonte la première partie de surface (13) et la deuxième partie de surface (15) et
les étapes c) et e) de pose des conduits (17) du système de chauffage et/ou de refroidissement ou de formation de la première couche (7) sont ensuite exécutées.

16. Procédé selon l'une des revendications 12 à 15, dans lequel, avant l'étape de pose des conduits (17) du système de chauffage et/ou de refroidissement, un tissu d'acier de construction est posé sur la deuxième couche (9) dans la première partie de surface (13) et sur la troisième couche (11) dans la deuxième partie de surface (15).
